# EUROPÄISCHE PATENTANMELDUNG

(11) **EP 2 160 959 A2**
(43) Veröffentlichungstag der Anmeldung: **10.03.2010**
(21) Anmeldenummer: 09011376.2
(22) Anmeldetag: 04.09.2009
(51) Int. Cl.: A47B 13/06, A47B 47/03, A47B 96/14, F16B 12/52

(54) **Tragkonstruktion für Möbel**

(30) Priorität: 08.09.2008 DE 202008011958 U
(71) Anmelder: alu mobile systeme GmbH & Co. KG, 32105 Bad Salzuflen (DE)
(72) Erfinder: Hagmeister, Frank, 6370 Kitzbühl (AT)
(74) Vertreter: TER MEER - STEINMEISTER & PARTNER GbR

(57) **Zusammenfassung**

Tragkonstruktion für Möbel, mit vertikalen Tragprofilen (10), die jeweils mindestens eine längsverlaufende hinterschnittene Nut (12) aufweisen, und Klemmbeschlägen (14), die mit in die hinterschnittenen Nuten (12) eingreifenden Klemmplatten (16) an den Tragprofilen zu befestigen sind und ein Auflager für Möbelelemente bilden, **dadurch gekennzeichnet, daß** zumindest einige der Klemmbeschläge (14) jeweils mindestens zwei rechtwinklig zu einander und zu den Tragprofilen (10) vorspringende Verbindungszapfen (22, 24) aufweisen, auf welche die Enden von rechtwinklig zueinander verlaufenden Traversen (26) und Streben (28) der Tragkonstruktion aufsteckbar sind.

## Beschreibung

Die Erfindung betrifft eine Tragkonstruktion für Möbel, mit vertikalen Tragprofilen, die jeweils mindestens eine längsverlaufende hinterschnittene Nut aufweisen, und Klemmbeschlägen, die mit in die hinterschnittenen Nuten eingreifenden Klemmplatten an den Tragprofilen zu befestigen sind und ein Auflager für Möbelelemente bilden.

Aus EP 1 692 972 A1 ist eine Tragkonstruktion dieser Art bekannt, bei der die Klemmbeschläge beispielsweise als Bodenträger für Regalböden dienen.

Aufgabe der Erfindung ist es, eine Tragkonstruktion zu schaffen, die einen einfachen Aufbau von stabilen Möbelgestellen, insbesondere für Schrankmöbel ermöglicht.

Diese Aufgabe wird erfindungsgemäß dadurch gelöst, daß zumindest einige der Klemmbeschläge jeweils mindestens zwei rechtwinklig zu einander und zu den Tragprofilen vorspringende Verbindungszapfen aufweisen, auf welche die Enden von rechtwinklig zueinander verlaufenden Traversen und Streben der Tragkonstruktion aufsteckbar sind.

Die Traversen und Streben lassen sich mit Hilfe der Klemmbeschläge zu in einer Ebene liegenden rechteckigen Rahmen verbinden, auf die dann verschiedene Korpuselemente, Fachböden, Arbeitsplatten oder dergleichen aufgelegt werden können. An jeder Ecke dieses Rahmens genügt ein einziger Klemmbeschlag zur stabilen Verbindung des Rahmens mit den vertikalen Tragprofilen. Auf diese Weise wird ein stabiles Raumgitter geschaffen, das sich mit geringem Arbeitsaufwand installieren läßt.

Vorteilhafte Ausgestaltungen der Erfindung sind in den Unteransprüchen angegeben.

Im folgenden wird ein Ausführungsbeispiel anhand der Zeichnung näher erläutert.

Es zeigen:
- Fig. 1: einen horizontalen Schnitt durch ein Tragprofil und die Enden einer Traverse und einer Strebe, die mit einem Klemmbeschlag an dem Tragprofil gehalten sind;
- Fig. 2: einen Schnitt durch den Klemmbeschlag längs der Linie II-II in Fig. 1;
- Fig. 3: eine perspektivische Ansicht des Klemmbeschlages;
- Fig. 4: die in Fig. 1 gezeigten Bauelemente in einer Frontansicht;
- Fig. 5: einen horizontalen Schnitt durch eine Tragkonstruktion für Schrankmöbel;
- Fig. 6: einen horizontalen Schnitt durch eine Tragkonstruktion für Eckschrankmöbel; und
- Fig. 7 - 9: Beispiele für Küchenschrankmöbel mit der erfindungsgemäßen Tragkonstruktion.

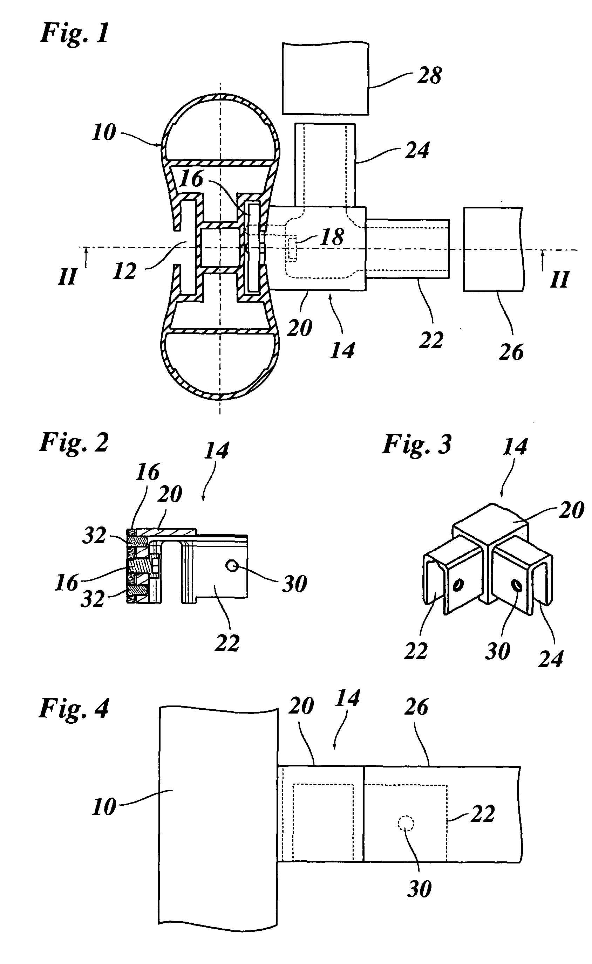

In Fig. 1 ist ein Schnitt durch ein Tragprofil 10 gezeigt, beispielsweise ein Strangprofil aus Aluminium, das einen länglichen, an beiden Enden verrundeten und in der Mitte leicht taillierten Querschnitt aufweist und auf jeder Seite eine zur Seitenfläche offene hinterschnittene Nut 12 bildet. Auf der rechten Seite in Fig. 1 ist an die Seitenfläche des Tragprofils ein Klemmbeschlag 14 angesetzt, der mit einer Klemmplatte 16 in die hinterschnittene Nut 12 eingreift. Die Klemmplatte kann mit einer Schraube 18 gegen einen Hauptkörper 20 des Klemmbeschlages gezogen werden, so daß der Beschlag klemmend an dem Tragprofil fixiert wird. Die dem Tragprofil 10 zugewandte Oberfläche des Hauptkörpers 20 ist an die taillierte Kontur des Tragprofils 10 angepaßt und weist ein leicht erhabenes Plateau auf, das in die schlitzförmige Öffnung der Nut 12 eingreift, so daß eine stabile und verdrehsichere Fixierung des Klemmbeschlages 14 an dem Tragprofil erreicht wird.

Von dem Hauptkörper 20 des Klemmbeschlages 14 gehen rechtwinklig zueinander zwei Verbindungszapfen 22, 24 aus, die in die Enden einer hohlen Traverse 26 bzw. einer hohlen Strebe 28 einsteckbar sind.

In Fig. 2 ist der Klemmbeschlag 14 im Schnitt dargestellt. Man erkennt, daß der Hauptkörper 20 und die Verbindungszapfen 22, 24 hohl sind und daß speziell die Verbindungszapfen 22 ein umgekehrt U-förmiges Profil haben. Bei der Montage ist die Schraube 18 durch das hohle Innere des Hauptkörpers 20 und des Befestigungszapfens 22 hindurch zugänglich.

Die einander zugewandten und eine Innenecke bildenden Schenkel der Verbindungszapfen 22, 24 weisen jeweils ein Schraubenloch 30 auf. Entsprechende Schraubenlöcher sind in den Enden der Traverse 26 und der Strebe 28 vorgesehen, so daß sich die Streben und Traversen zugfest mit dem Klemmbeschlag 14 verschrauben lassen. Die Schraubenköpfe liegen dann auf der in der Gebrauchsstellung für den Betrachter praktisch unsichtbaren Innenseite des durch die Streben und Traversen gebildeten Rahmens.

Weiterhin ist in Fig. 2 zu erkennen, daß die Klemmplatte 16 oberhalb und unterhalb der Schraube 18 je einen Stift 32 aufweist, der durch die schlitzförmige Öffnung der Nut 12 in eine zugehörige Führungsbohrung des Klemmbeschlages 14 eingreift, so daß eine verdrehsichere Befestigung der Klemmplatte 16 an dem Hauptkörper 20 erreicht wird.

Wie in Fig, 3 zu erkennen ist, sind die Verbindungszapfen 22 und 24 gegenüber dem annähernd quaderförmigen Hauptkörper 20 etwas abgesetzt, so daß, wenn die Streben und Traversen 26, 28 aufgesteckt sind (Fig. 4), deren Außenflächen mit den Oberflächen des Hauptkörpers 20 des Klemmbeschlages bündig sind.

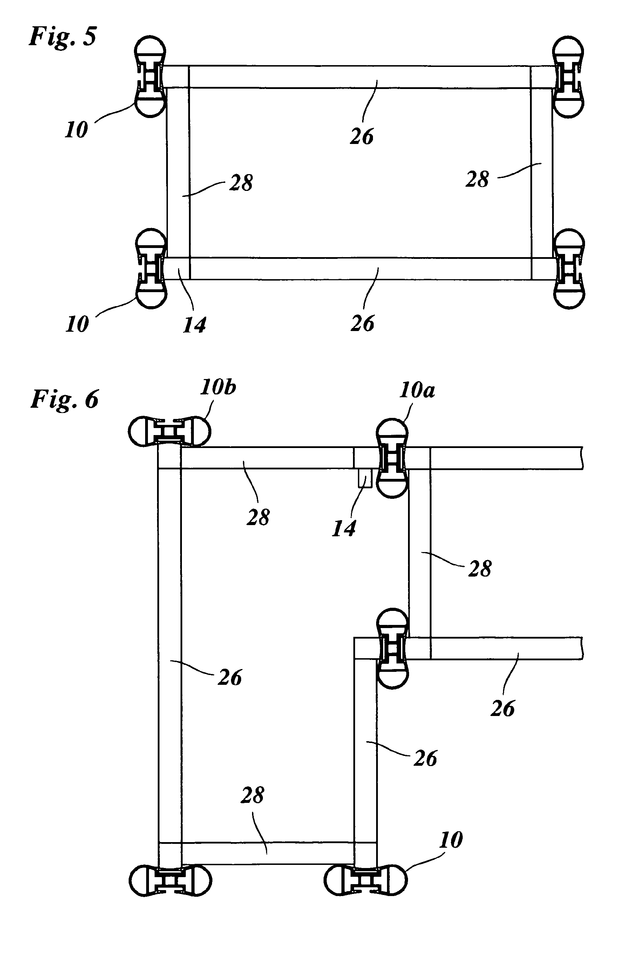

In Fig. 5 ist ein horizontaler Schnitt durch eine vollständige Tragkonstruktion für ein Schankmöbel gezeigt. Diese Tragkonstruktion wird durch vier vertikale Tragprofile 10 der in Fig. 1 gezeigten Art gebildet, die durch die horizontal verlaufenden Traversen 26 und die Streben 28 miteinander verbunden sind. Die Streben und Traversen bilden dabei einen stabilen rechteckigen Rahmen, der an jeder Ecke mit nur einem einzigen Klemmbeschlag 14 an dem zugehörigen Tragprofil 10 gehalten ist. Zwischen den vier Tragprofilen 10, die in Fig. 5 gezeigt sind, können weitere nicht gezeigte Rahmen gehalten sein, die jeweils durch Traversen 26 und Streben 28 gebildet werden, so daß die Tragkonstruktion insgesamt ein äußerst stabiles Raumgitter bildet. Jeder Rahmen aus den Traversen 16 und den Streben 28 kann dabei als Auflager für einen Regalboden, einen Schrankkorpus, eine Arbeitsplatte oder dergleichen dienen, die sich ggf. mit Hilfe von Schrauben von der Unterseite her an den Traversen und/oder Streben befestigen lassen. Vorzugsweise haben daher auch diese Streben und Traversen ein an der Unterseite offenes Hohlprofil.

Die Rahmen lassen sich mit Hilfe der Klemmbeschläge 14 stufenlos in jeder beliebigen Höhe an den Tragprofilen befestigen. Aufgrund der symmetrischen Form der Tragprofile 10 können darüber hinaus zusätzliche Klemmbeschläge 14 an den Außenseiten der Tragprofile angebracht werden, so daß sich beliebig viele regalförmige Elemente miteinander verketten lassen.

In Fig. 6 ist beispielhaft gezeigt, wie mit der hier vorgeschlagenen Tragkonstruktion auch eine Ecklösung realisiert werden kann. Dabei erweist es sich als vorteilhaft, daß die Tragprofile 10 im Querschnitt so dimensioniert sind, daß das in Fig. 6 mit 10a bezeichnete Tragprofil und das rechtwinklig dazu orientierte, mit 10b bezeichnete Tragprofil mit ihren äußeren Enden etwa gleich weit über die durch die Traversen und Streben gebildeten Rahmen überstehen, so daß die Konstruktion an eine Wand anlehnt und daran befestigt werden kann.

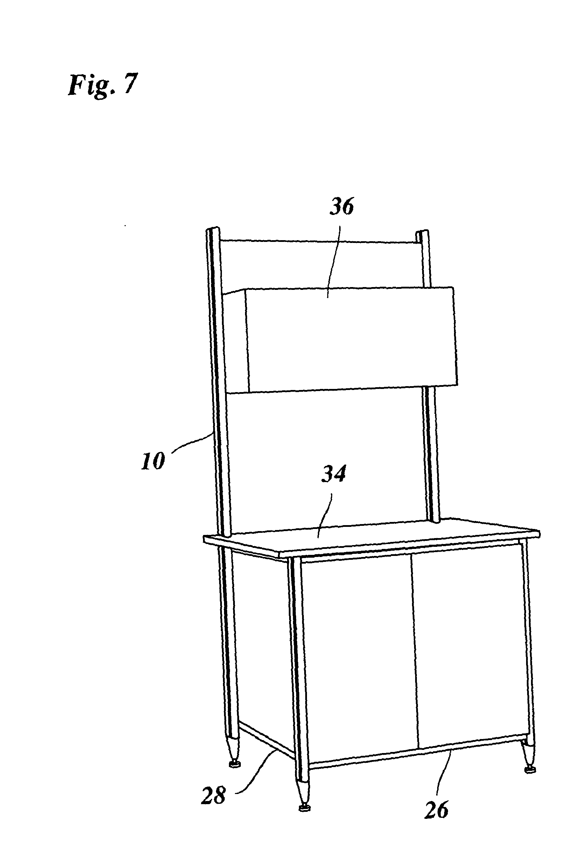

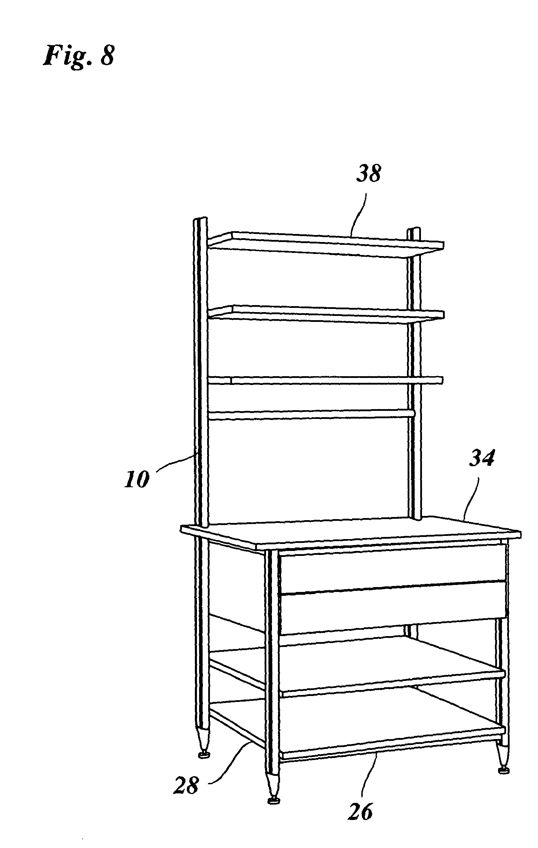

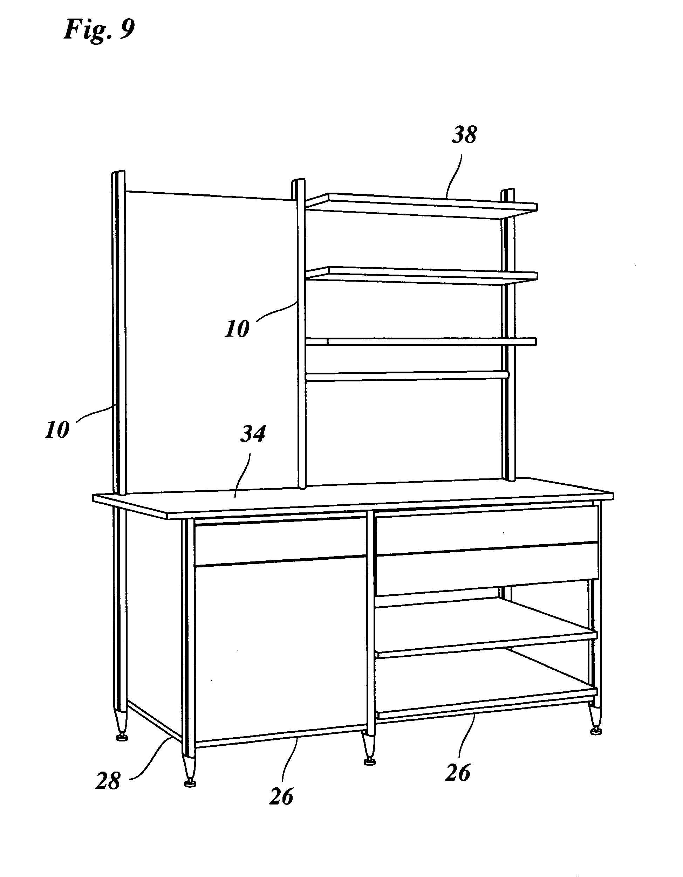

Die hier gezeigte Tragkonstruktion eignet sich insbesondere auch für den Aufbau von Küchenmöbeln, deren Korpuselemente (Unterschränke) auf die durch die Traversen 26 und Streben 28 gebildeten Rahmen aufgestellt werden. Beispiele sind in Fig. 7 bis 9 gezeigt.

Ein weiter oben gelegener Rahmen kann dann z.B. eine Arbeitsplatte 34 tragen. Die Tragprofile 10 enden dann vorzugsweise unmittelbar unter der Arbeitsplatte. Die hinteren, näher zur Wand gelegenen Tragprofile 10 können jedoch oberhalb der Arbeitsplatte durch entsprechende Tragprofile nach oben verlängert werden, an denen dann Hängeschränke 36 oder Regalböden 38 befestigt werden können. Diese hinteren Tragprofile stehen vorzugsweise mit ihren unteren Ende auf der Arbeitsplatte auf, sind jedoch durch Verbindungsorgane, die durch Bohrungen der Arbeitsplatte hindurchgehen, fest mit den unteren Tragprofilen verbunden. Alternativ können durchgehende Tragprofile verwendet werden, die hinter der Arbeitsplatte oder in entsprechenden Ausnehmungen derselben liegen. Wahlweise ist zusätzlich mit Hilfe von geeigneten Beschlagen eine Wandbefestigung der Tragprofile möglich.

## Patentansprüche

1. Tragkonstruktion für Möbel, mit vertikalen Tragprofilen (10), die jeweils mindestens eine längsverlaufende hinterschnittene Nut (12) aufweisen, und Klemmbeschlägen (14), die mit in die hinterschnittenen Nuten (12) eingreifenden Klemmplatten (16) an den Tragprofilen zu befestigen sind und ein Auflager für Möbelelemente bilden, **dadurch gekennzeichnet, daß** zumindest einige der Klemmbeschläge (14) jeweils mindestens zwei rechtwinklig zu einander und zu den Tragprofilen (10) vorspringende Verbindungszapfen (22, 24) aufweisen, auf welche die Enden von rechtwinklig zueinander verlaufenden Traversen (26) und Streben (28) der Tragkonstruktion aufsteckbar sind.

2. Tragkonstruktion nach Anspruch 1, **dadurch gekennzeichnet, daß** einer der Verbindungszapfen (22) zu der der Klemmplatte (16) entgegengesetzten Seite vorspringt und einen Kanal bildet, durch den hindurch eine Schraube (18) zum Spannen der Klemmplatte (16) zugänglich ist.

3. Tragkonstruktion nach einem der vorstehenden Ansprüche, **dadurch gekennzeichnet, daß** die Verbindungszapfen (22, 24) gegenüber einem Hauptkörper (20) des Klemmbeschlages (14) derart abgesetzt sind, daß die Außenflächen der aufgesteckten Traversen (26) und Streben (28) mit den Außenflächen des Hauptkörpers (20) bündig sind.
